# FASCICULE DE BREVET EUROPEEN

(11) **EP 3 839 471 B1**
(45) Date de publication et mention de la délivrance du brevet: **07.06.2023**
(21) Numéro de dépôt: 20214579.3
(22) Date de dépôt: 16.12.2020
(51) Int. Cl.: G01M 7/08

(54) **PROCÉDÉ DE SYNCHRONISATION OU DÉPHASAGE DE GÉNÉRATEURS DE CHOC**
VERFAHREN ZUR SYNCHRONISIERUNG ODER PHASENVERSCHIEBUNG VON STOSSWELLENGENERATOREN
METHOD FOR SYNCHRONISING OR PHASE SHIFT OF IMPACT GENERATORS

(30) Priorité: 19.12.2019 FR 1914986
(43) Date de publication de la demande: 23.06.2021
(73) Titulaire: Centre National d'Etudes Spatiales, 75039 Paris Cedex 01 (FR)
(72) Inventeur: DOULSIER, Geoffrey, 31401 Toulouse Cedex 9 (FR); DILHAN, Denis, 31401 Toulouse Cedex 9 (FR)
(74) Mandataire: Germain Maureau

(56) Documents cités:
- FR-A1- 2 802 300
- RU-C1- 2 338 169
- Ecss Secretariat: "ECSS-E-HB-32-25A Space engineering Mechanical shock design and verification handbook", , 14 juillet 2015 (2015-07-14), XP055727113, Extrait de l'Internet: URL:ftp://escies.org/ecss.nl/Handbooks/ECS S-E-HB-32-25A(14July2015).pdf [extrait le 2020-09-02]

## Description

### Domaine Technique

La présente invention se rapporte à un procédé de synchronisation ou de déphasage d'au moins deux générateurs de choc à cartouche.

L'invention trouve des applications particulièrement intéressantes dans le domaine de la qualification aux environnements mécaniques de type chocs pyrotechniques, applicable aux domaines de la défense, de l'aéronautique et du spatial, en particulier des équipements satellites.

### Technique antérieure

Dans le domaine spatial, les équipements satellites subissent au cours de leur vie des chocs. Ces chocs sont susceptibles d'endommager le ou les équipements du satellite, ainsi que le satellite lui-même.

Les sources de choc sont diverses et peuvent être appliquées à diverses zones des équipements et/ou du satellite.

Une source de choc connue peut par exemple provenir des séparations inter-étages ainsi que de la séparation de la coiffe du lanceur en phase de vol. La séparation de la coiffe est réalisée au moyen d'actionneurs pyrotechniques qui génèrent une sollicitation mécanique brutale sur le lanceur lors de la séparation.

Une autre source de choc peut provenir par exemple du fonctionnement des dispositifs pyrotechniques de séparation qui relient le satellite au lanceur lors de la séparation de ces deux éléments.

On connaît également une source de choc provenant du fonctionnement de dispositifs pyrotechniques destinés à libérer des appendices tels que des panneaux solaires, des réflecteurs d'antennes ou des mats déployables. On connaît par exemple l'utilisation de vannes pyrotechniques qui sont commandées et qui génèrent un choc lors de leur ouverture.

Afin d'évaluer la résistance aux chocs des équipements satellite, des essais de qualification au sol sont réalisés au préalable sur ces équipements.

Ces essais au sol consistent à simuler les chocs qui seront subis par les équipements satellite au cours de leur vie. Généralement ces chocs sont calibrés et d'intensité supérieure aux chocs qui seront réellement subis par les équipements satellite au cours de leur vie.

Afin de simuler ces chocs, il est connu de l'art antérieur d'utiliser des générateurs de choc. On connaît en particulier des générateurs de choc in situ qui permettent d'appliquer le choc directement au niveau de la zone de l'équipement à tester.

On connaît en outre des générateurs de choc pyrotechniques qui utilisent un détonateur ou une charge de poudre propulsive pour leur mise en fonctionnement. Dans le cas des générateurs de choc utilisant de la poudre, la mise à feu de cette dernière créée dans le générateur de choc une augmentation de pression qui engendre l'entrainement d'un impacteur destiné à générer un choc sur l'équipement à tester.

Un inconvénient des générateurs à détonateurs réside dans le fait que le choc généré est extrêmement puissant et difficilement réglable en amplitude et contenu fréquentiel, ce qui peut induire une détérioration de l'équipement à tester. Il est donc nécessaire d'utiliser des éléments intermédiaires placés entre le générateur de choc et l'équipement à tester tels que des pièces fusibles en aluminium ou des amortisseurs en plastique. Cependant ces éléments intermédiaires ne sont pas toujours suffisants pour répondre aux spécifications d'essais de l'équipement à tester lors des essais au sol.

Un autre inconvénient de la mise en fonctionnement de ce type de générateur est la nécessité d'une habilitation pyrotechnique de l'opérateur. En effet, le chargement du générateur en poudre ou l'utilisation d'un détonateur constitue une opération réglementée à réaliser en laboratoire de pyrotechnie. L'utilisation de ces types de générateurs impose également une zone pyrotechnique sur le site d'essai.

Un autre inconvénient est que les gaz de détonation ou de combustion sont libérés dans l'atmosphère autour des générateurs de chocs et peuvent entraîner une pollution des équipements à tester, cet évènement est inacceptable sur des modèles de qualification ou de vol qui y sont sensibles.

Une solution de l'art antérieur pour pallier ce problème consiste en une utilisation détournée des pistolets à clou. Le chargeur de clou du pistolet est vide et seul le marteau est employé afin de générer un choc. Cependant, ce type de générateur implique une mise en oeuvre manuelle de l'opérateur pour générer le choc. Cette mise en oeuvre manuelle implique une imprécision de positionnement et d'orientation de l'injection de choc et l'impossibilité de synchroniser plusieurs pistolets à clou. En outre ces pistolets à clou ne sont pas hermétiques et génèrent une pollution lors de leur fonctionnement. Le document "ECSS-E-HB-32-25A Space engineering Mechanical shock design and vérification handbook",14 juillet 2015, divulgue un procédé de synchronisation d'au moins deux générateurs de choc à cartouche.

Il existe donc un besoin de fournir un générateur de choc d'amplitude et de contenu fréquentiel réglable.

Il existe en outre un besoin de fournir un générateur de choc dont la mise en oeuvre ne nécessite pas d'habilitation pyrotechnique.

Les essais de chocs pouvant avoir lieu sur des équipements sensibles à la pollution particulaire, il existe un besoin de propreté de générateur de choc compatible des exigences de concentration particulaire des salles propres.

Dans un souci d'amélioration de la qualification des essais au sol, il est intéressant d'utiliser au même instant plusieurs générateurs de choc agencés en différents points d'injection de choc sur l'équipement à tester. Cependant, des variations temporelles des chocs générés peuvent être constatées entre chaque générateur. Il existe donc un besoin de synchronisation de ces générateurs de chocs.

Il peut également être intéressant d'utiliser à différents instants plusieurs générateurs de choc agencés en différents points d'injection de choc sur l'équipement à tester afin de mieux reproduire la propagation des chocs dans les structures. Il existe donc un besoin de déphasage de ces générateurs de chocs.

### Exposé de l'invention

L'invention a notamment pour but de pallier au moins l'un de ces inconvénients et concerne selon un aspect un procédé de synchronisation ou de déphasage d'au moins deux générateurs de choc à cartouche, lesdits au moins deux générateurs de choc étant actionnés au moyen d'un actionneur électromagnétique alimenté par un boitier de puissance et de commande, dans lequel le procédé comprend des étapes de :
- Mise en fonctionnement d'au moins deux générateurs de choc (1) comportant chacun une cartouche inerte,
- Détection d'un instant de percussion des cartouches de chaque générateur de choc,
- Synchronisation ou déphasage desdits au moins deux générateurs de choc.

Ainsi, grâce au procédé selon l'invention, la génération de choc sur un équipement à tester est optimisée.

L'utilisation de cartouches pyrotechniques permet de s'affranchir des risques pyrotechniques inhérents à la préparation des générateurs de choc de l'art antérieur qui nécessitent une manipulation de poudre propulsive pour charger ces générateurs ou de détonateurs dans une version encore plus ancienne. Ces cartouches présentent également l'avantage de simplifier le chargement des générateurs qui sont réarmables par simple remplacement de la cartouche tirée sans nécessiter d'opération pyrotechnique.

Selon d'autres caractéristiques de l'invention, le procédé comporte l'une ou plusieurs des caractéristiques optionnelles suivantes considérées seules ou selon toutes les combinaisons possibles.

Selon une caractéristique, la détection de l'instant de percussion comprend une étape de mesure, au moyen d'une courbe d'intensité, d'un courant reçu par l'actionneur électromagnétique depuis le boitier de commande et puissance de chaque générateur de choc, l'instant de percussion étant matérialisé par une cassure de ladite courbe d'intensité.

Selon une caractéristique, le procédé comprend une étape de mesure d'un choc émis par l'actionneur électromagnétique lors de la percussion des cartouches inertes.

Selon une caractéristique, la détection de l'instant de percussion comprend une étape de comparaison de l'instant de percussion de chaque générateur de choc.

Selon une caractéristique, la détection de l'instant de percussion comprend une étape de constatation d'un écart des instants de percussion de chaque générateur de choc.

Selon une caractéristique, la synchronisation ou le déphasage desdits au moins deux générateurs de choc consiste en un décalage dans le temps d'une mise en fonctionnement de chaque générateur de choc en fonction de leur instant de percussion.

Selon une caractéristique, le décalage de la mise en fonctionnement est réalisé par paramétrage de retards électroniques intégrés sur une commande de chaque voie du boitier de puissance et de commande.

D'autres caractéristiques et avantages de l'invention apparaîtront à la lecture de la description nullement limitative qui suit et des figures annexées.

### Brève description des dessins

[Fig. 1] La figure 1 est une représentation d'un générateur de choc comprenant des moyens de réglage d'une course d'un impacteur selon un premier mode de réalisation
[Fig. 2] La figure 2 illustre le générateur de choc selon une variante de réalisation.
[Fig. 3] La figure 3 illustre le générateur de choc selon une variante de réalisation.
[Fig. 4] La figure 4 est une représentation d'une mise en fonctionnement du générateur de choc.
[Fig. 5] La figure 5 est une représentation d'une purge du générateur de choc.
[Fig. 6] La figure 6 est une représentation d'un générateur de choc comprenant des moyens de réglage d'une course d'un impacteur selon un deuxième mode de réalisation.
[Fig. 7] La figure 7 une illustration schématique d'une détection d'un instant de percussion d'une cartouche d'un générateur de choc.
[Fig. 8] La figure 8 est une illustration schématique d'une détection d'un choc émis par un actionneur électromagnétique et un percuteur lors de la percussion de cartouches.

### Description des modes de réalisation

Par souci de simplification, les éléments identiques sont repérés par des signes de référence identiques sur l'ensemble des figures.

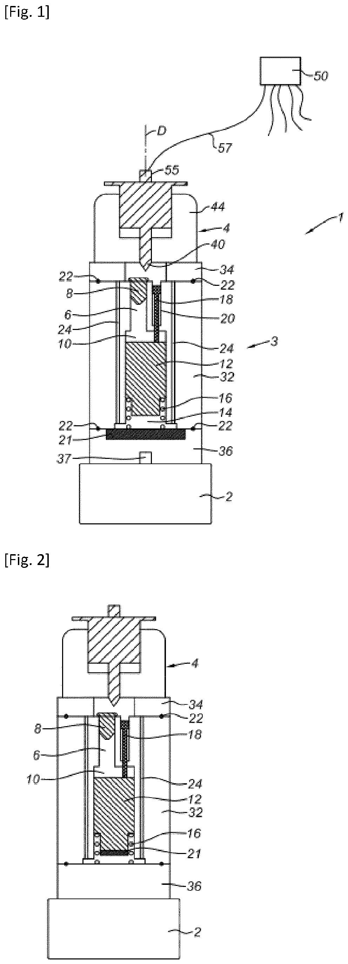

On a représenté en figure 1 un mode de réalisation d'un générateur de choc 1 configuré pour générer un choc sur un équipement 2 à tester. L'équipement à tester peut être par exemple un équipement spatial tel qu'un équipement satellite ou un satellite.

Le générateur de choc 1 comprend un corps 3 et un dispositif de mise en fonctionnement 4 qui s'étendent selon un axe longitudinal D. Le corps 3 comprend un canon 32 dont une extrémité est fixée à une culasse 34 et une extrémité opposée est fixée à une enclume 36. Dans le présent exemple, la culasse et l'enclume sont de continuité géométrique avec le canon. Cette configuration permet de fournir un générateur de choc compact et au diamètre réduit.

L'enclume est destinée à relier le canon 32 à l'équipement à tester. Ainsi l'enclume est configurée pour servir d'interface de fixation entre le générateur de choc et l'équipement à tester. L'enclume peut comprendre à cet effet un moyen de fixation 37 par exemple complémentaire à des interfaces d'adaptation présentes sur l'équipement à tester. Par exemple le moyen de fixation de l'enclume est un trou taraudé et les interfaces d'adaptation de l'équipement à tester, une vis ou une tige filetée. Le générateur de choc 1 peut être ainsi vissé sur l'équipement à tester 2.

Dans le présent exemple, la culasse 34 et l'enclume 36 sont fixées au canon 32 par des moyens de vissage. Cette configuration permet un montage et un démontage aisé de la culasse 34et de l'enclume 36 sur le canon 32.

Le canon 32 comprend un logement de réception 6 configuré pour recevoir une cartouche pyrotechnique 8. Le logement de réception 6 présente des dimensions spécifiquement choisies pour recevoir et maintenir la cartouche pyrotechnique 8. Le logement 6 débouche dans une chambre d'expansion 10 conçue pour recevoir des gaz de combustion générés suite à une mise à feu de la cartouche pyrotechnique 8. La mise à feu de la cartouche pyrotechnique sera décrite de manière plus précise dans la suite du document.

La chambre d'expansion 10 est délimitée par un impacteur 12 engagé de façon coulissante dans un alésage 14 du canon 32. L'alésage 14 forme une continuité de la chambre d'expansion 10. L'impacteur 12 est configuré pour réaliser une course dans l'alésage 14 du canon 32 entre une position initiale dans laquelle l'impacteur 12 est maintenu immobile dans l'alésage 14 du canon, à distance de l'enclume 36, et une position finale dans laquelle l'impacteur 12 est entré en contact avec l'enclume 36. L'impact de l'impacteur 12 sur l'enclume 36 en fin de course permet de générer un choc sur l'équipement à tester 2.

Le canon 32 comprend un moyen de rappel 16 destiné à maintenir l'impacteur 7 en position initiale avant mise en fonctionnement du générateur de choc. Le moyen de rappel 16 est agencé dans l'alésage 14 du canon, en appui contre l'impacteur 12 et l'enclume 36. Dans le présent exemple, le moyen de rappel 16 est configuré pour se compresser pendant la course de l'impacteur 12 et revenir à son état initial une fois la course de l'impacteur 12 terminée. Le retour du moyen de rappel 16 à son état initial entraine un retour de l'impacteur 12 dans sa position initiale et permet de s'affranchir d'une intervention d'un utilisateur. Dans le présent exemple, le moyen de rappel 16 est un ressort de compression dit ressort de réarmement.

Le générateur de choc 1 comprend des moyens de réglage de la course de l'impacteur 12. Les moyens de réglage permettent de paramétrer la course de l'impacteur entre une course dite course minimale dans laquelle la distance entre l'impacteur 12 et l'enclume 36 est la plus petite et une course dite course maximale dans laquelle la distance entre l'impacteur 12 et l'enclume 36 est la plus grande.

Le paramétrage de la course de l'impacteur permet de régler l'amplitude du choc appliqué sur l'équipement à tester.

Dans les exemples représentés aux figures 1 à 5, les moyens de réglage sont configurés pour modifier la position initiale de l'impacteur dans le canon.

Dans ce mode de réalisation, les moyens de réglage de la course de l'impacteur comprennent une vis de réglage 18. La vis de réglage est agencée dans un taraudage 20 prévu dans le canon 32, adjacent au logement de réception 20 de la cartouche. La vis de réglage 18 est mobile en translation selon l'axe longitudinal D, dans le taraudage, entre une position (non représentée) dans laquelle une de ses extrémités affleure l'extrémité du canon reliée à la culasse et une position dans laquelle ladite extrémité est engagée dans le taraudage, à distance de l'extrémité du canon reliée à la culasse.

L'extrémité opposée de la vis de réglage 18 est en butée contre l'impacteur 12. Ainsi, le déplacement de la vis de réglage 18 entraine le déplacement de l'impacteur 12 et permet de modifier la position initiale de l'impacteur 12, maintenu par le ressort à réarmement 16, dans l'alésage 14 du canon. La modification de la position initiale de l'impacteur permet de modifier la distance entre l'impacteur et l'enclume et donc la course de l'impacteur dans l'alésage. Dans le présent exemple, le moyen de rappel est configuré pour maintenir l'impacteur dans la position initiale en butée contre la vis de réglage.

Le déplacement de la vis de réglage 18 peut être réalisé dans le taraudage au moyen d'une clé Allen par exemple. L'accès à la vis de réglage dans le canon 32 peut être obtenu par un dévissage préalable de la culasse.

La localisation de la vis de réglage, interne au générateur de choc, permet de sécuriser le réglage de la course de l'impacteur lorsque les éléments constituants le générateur sont assemblés.

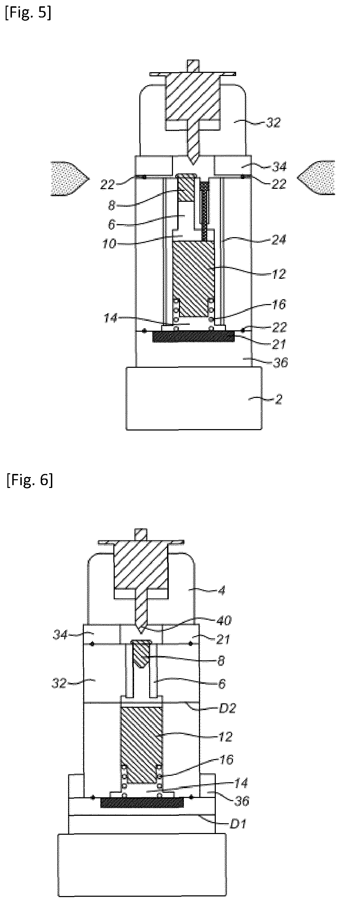

Dans un mode de réalisation illustrée à la figure 6 les moyens de réglage sont configurés pour modifier la longueur de l'alésage 16 dans lequel est logé l'impacteur 12.

Dans ce mode de réalisation, le générateur de choc 1 comprend des moyens de réglage (non visibles) de position axial du canon. Par exemple, le canon peut comprendre un filetage et l'enclume peut comprend un taraudage de sorte que le canon 2 se visse ou se dévisse dans l'enclume 3 de manière, respectivement, à réduire ou agrandir la longueur de l'alésage du canon.

Dans ce mode de réalisation, le canon 32 et l'enclume 36 ne sont pas de continuité géométrique. L'enclume 36 présente un diamètre D1 supérieur au diamètre D2 du canon. Dans le présent exemple, le canon est engagé dans l'enclume et est mobile en translation suivant l'axe longitudinal D.

L'alésage 14 du canon est ainsi paramétrable en longueur. Le paramétrage de la position axial du canon 32 permet de paramétrer la course de l'impacteur 12 qui peut être réglée entre une course dite minimale dans laquelle la longueur de l'alésage est la plus petite et une course dite maximale dans laquelle la longueur de l'alésage est la plus grande.

Dans les deux modes de réalisation qui viennent d'être décrits, le réglage de la course peut être réalisé avant la fixation du générateur de choc 1 sur l'équipement à tester 2 ou après sa fixation. Le paramétrage de la course peut ainsi être réalisé à tout moment avant après ou pendant l'essai.

L'amplitude du choc peut également être fonction de la masse du chargement de poudre propulsive dans la cartouche pyrotechnique 8. A ce titre, l'homme du métier saura choisir les dimensions du logement de réception 6 de la cartouche en fonction de la masse de poudre propulsive et donc de la longueur de la cartouche qu'il souhaite utiliser.

Le contenu fréquentiel du choc peut en outre être réglé en modifiant la masse (géométrie et densité du matériau) de l'impacteur. Dans le présent exemple, l'impacteur est en acier, mais d'autres matériaux, plus ou moins denses peuvent être utilisés.

Le contenu fréquentiel peut d'autre part être modulé au moyen d'un amortisseur. Le matériau et l'épaisseur de l'amortisseur peuvent être choisis en fonction du contenu fréquentiel désiré.

Dans les exemples représentés, le générateur de choc comprend un amortisseur 21 agencé dans le canon. Dans les exemples représentés aux figures 1 et 3 à 6, l'amortisseur est fixé à l'enclume et s'étend sur une partie de l'enclume. Dans une variante, l'amortisseur peut s'étendre sur toute la surface l'enclume.

Comme l'illustre la figure 2, l'amortisseur 21 peut être fixé sur l'impacteur, sur une extrémité de l'impacteur agencée en regard de l'enclume 36.

Le générateur de choc 1 peut comprendre au moins un moyen d'étanchéité 22.

Dans les exemples représentés un moyen d'étanchéité 22 est disposé entre la culasse 36 et le canon 32 et un moyen d'étanchéité 22 est disposé entre l'enclume 34 et le canon 32.

Les moyens d'étanchéité 22 permettent d'empêcher une fuite de gaz en dehors de la chambre d'expansion 10 et de l'alésage 14 du générateur de choc, notamment lors de son fonctionnement. Il est ainsi possible d'utiliser le générateur de choc dans des salles blanches d'intégration de satellites par exemple.

Le moyen d'étanchéité 22 peut être par exemple un joint d'étanchéité. Grâce aux joints d'étanchéité, le générateur de choc est fermé hermétiquement et aucune pollution particulaire n'est émise du fait de son fonctionnement. Les gaz de combustion restent emprisonnés dans le générateur de choc étanche. Ainsi, l'utilisateur désireux de conserver un faible taux de particules aux environs de l'équipement à tester pourra évacuer de la salle blanche le générateur de choc après son tir et ne procéder à la libération des gaz et particules de combustion qu'à l'extérieur de la salle. Le générateur de choc est hermétique et propre et ne génère pas de pollution pendant son fonctionnement.

Le générateur de choc peut comprendre un dispositif de purge. Le dispositif de purge est configuré pour purger les gaz générés par la cartouche pyrotechnique suite à sa mise à feu, en dehors du générateur de choc et à faire chuter ainsi la pression à l'intérieur du générateur de choc avant son démontage pour rechargement.

Dans un mode de réalisation, le dispositif de purge comprend au moins un canal de purge 24. Dans l'exemple représenté à la figure 1 le dispositif de purge comprend deux canaux de purge 24 s'étendant parallèlement à l'axe longitudinal D, de part et d'autre de l'alésage du canon. Chaque canal de purge 24 comprend une extrémité débouchant dans l'alésage 14 du canon formant continuité de la chambre de combustion 10 et une extrémité opposée débouchant sur une portion de jonction entre le canon 32 et la culasse 34.

Dans ce mode de réalisation, les moyens d'étanchéité 22 permettent également d'éviter une fuite de gaz par le biais des canaux 24 suite à la mise à feu de la cartouche 8.

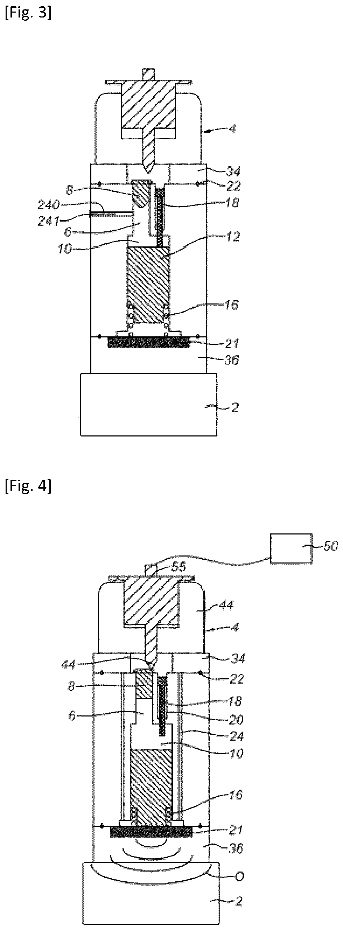

Dans un mode de réalisation représenté à la figure 3, le dispositif de purge s'étend perpendiculairement à l'axe longitudinal D. Dans le présent exemple, le dispositif de purge comprend un conduit 240 agencé dans le générateur de choc et formant un passage entre l'alésage 14 et la chambre d'expansion 10 du canon 32 et l'extérieur du générateur de choc et une vis-pointeau 241 configurée pour être déplacée entre une position dans laquelle la vis-pointeau obture le conduit 240 de sorte à maintenir les gaz de combustion à l'intérieur du générateur de choc et une position dans laquelle la vis-pointeau 241 permet la purge des gaz de combustion, à l'extérieur du générateur de choc.

Grâce au dispositif de purge, les gaz contenus dans le générateur de choc à la suite de la mise à feu de la cartouche peuvent être purgés à tout moment, dans ou en dehors de la salle d'essai par exemple.

Le générateur de choc est déclenché au moyen du dispositif de mise en fonctionnement 4. Le dispositif de mise en fonctionnement est relié au canon 2 par le biais de la culasse 34. Dans un mode de réalisation, le dispositif de mise en fonctionnement 4 comprend un actionneur électromagnétique (solénoïde) comportant un percuteur 40 maintenu en position haute dans un alésage de la culasse 34 au moyen d'un ressort de rappel (non représenté).

Le percuteur 40 est destiné à percuter la cartouche pyrotechnique 8 disposée dans le logement 6 du canon 32. Le percuteur 40 peut être par exemple un marteau.

Le générateur de choc peut comprendre une butée de percuteur (non représentée) qui est aussi un appui du culot de la cartouche pyrotechnique. La butée de percuteur est destinée à maintenir le percuteur en place lors du dévissage de la culasse 34, du canon 32 et de réaliser une surface d'appui au ressort de rappel du moyen percuteur.

L'alésage de la culasse recevant le percuteur 40 débouche dans le logement de réception 6 de la cartouche. Dans l'exemple représenté aux figures 1 à 5 le logement de réception est décalé par rapport à l'axe longitudinal D. Le décalage du logement de réception de la cartouche permet au percuteur 40 de percuter la cartouche 8 au niveau de son bourrelet. A ce titre, des cartouches à percussion annulaire sont utilisées.

Dans une variante représentée à la figure 6, des cartouches à percussion centrale peuvent être utilisées. Dans cette variante, le logement de réception de la cartouche s'étend selon l'axe longitudinal D et l'alésage prévu pour recevoir le percuteur 40 est agencé en regard d'un axe de symétrie du logement de réception de la cartouche.

Le percuteur 40 forme la partie mobile de l'actionneur électromagnétique. Le percuteur 40 est mis en mouvement au moyen d'une bobine électrique (non visible) de l'actionneur électromagnétique. Cet actionneur électromagnétique est agencé dans un capot dit capot percuteur 44 permettant de protéger ledit actionneur électromagnétique. Le capot percuteur 44 peut être relié à la culasse 34 au moyen d'une bague de serrage (non représentée) par exemple.

L'actionneur électromagnétique est mis en fonctionnement au moyen d'un boitier de puissance et de commande, électronique et indépendant 50 configuré pour envoyer un courant de commande au générateur de choc 1. Le boitier de commande 50 est un boitier de type multi voies permettant le tir de plusieurs générateurs de chocs. Lorsque plusieurs générateurs de choc sont utilisés, chacun de ces générateurs de choc peut comprendre un connecteur électrique 55 de raccordement à une ligne électrique 57 de commande avec chaque voie de sortie du boitier de puissance et de commande 50.

Dans un autre mode de réalisation, chaque générateur de choc peut être équipé avec une sortie câblée à une extrémité du connecteur de raccordement à la ligne de commande.

Dans un mode de réalisation, le dispositif de mise en fonctionnement 4 comprend une électrode (non représentée) configurée pour appliquer un courant électrique en un point du bourrelet pour une cartouche à percussion annulaire ou sur une amorce d'une cartouche à percussion centrale. L'effet Joule engendre un échauffement local de l'enveloppe métallique de la cartouche qui est suffisant pour mettre à feu la composition d'amorçage et ainsi d'initier le chargement de la cartouche. Ce courant électrique de plusieurs centaines d'ampères peut être obtenu à l'aide de la décharge rapide d'un condensateur électrique.

Le fonctionnement du générateur de choc est décrit par la suite.

La course de l'impacteur est paramétrée en réglant la position initiale de l'impacteur 12 au moyen de la vis de réglage (figures 1 à 5) ou en modifiant la longueur de l'alésage au moyen d'un vissage/dévissage du canon 32 dans l'enclume 36 grâce au filetage/taraudage prévu dans le générateur de choc (figure 6).

Lorsque la course de l'impacteur est réglée et qu'une cartouche 22 est placée dans le logement de réception 6 du canon, un condensateur électrique du boitier de puissance et de commande 50 se décharge dans l'actionneur électromagnétique. Le boitier de puissance et de commande permet de commander le générateur de choc à distance.

L'actionneur électromagnétique dans lequel se décharge le condensateur électrique génère un mouvement de translation du percuteur 40 dans l'alésage de la culasse 34. Le percuteur 40 percute la cartouche pyrotechnique. Dans l'exemple représenté aux figures 1 à 5 la cartouche est une cartouche à percussion annulaire, ainsi la percussion du moyen percuteur n'est pas centrée sur la cartouche mais est réalisée sur le bourrelet de la cartouche. L'homme de l'art peut remplacer la cartouche à percussion annulaire par une cartouche à percussion centrale et adapter le système de percussion en conséquence (figure 6).

La cartouche 8 qui contient de la poudre propulsive génère des gaz chauds sous pression lorsqu'elle est percutée.

Comme l'illustre la figure 4, ces gaz se détendent dans la chambre d'expansion 10 et propulsent l'impacteur 12 qui compresse le ressort de réarmement 16 dont la force est négligeable par rapport à celle des gaz de combustion. L'impacteur 12 réalise ainsi une course dans l'alésage 14 du canon jusqu'à impacter l'enclume 36. Ainsi lors du fonctionnement du générateur de choc, l'impacteur, en fin de course, entre en contact avec l'enclume 36 et écrase l'amortisseur 21 agencé sur l'enclume ou sur l'impacteur, dont la déformation permet de contrôler le niveau de décélération de l'impacteur. Cet amortisseur 21 est une pièce consommable qui selon son état de détérioration doit être remplacée après chaque tir par exemple en dévissant l'enclume 36 du canon 32.

Au moment de l'impact, un choc mécanique O est formé (figure 4). Un champ d'accélération est généré et se propage depuis l'enclume 6, jusqu'à l'équipement à tester 2.

Une fois le choc généré, un jeu prévu dans l'alésage du canon permet aux gaz de s'équilibrer autour de l'impacteur 12. L'équilibre des gaz permet au ressort de réarmement 16 de retourner dans son état initial et d'entrainer ainsi le retour de l'impacteur 12 en position initiale.

Pour réitérer l'opération, l'utilisateur peut retirer le générateur de choc 1 de l'équipement à tester 2 et remplacer la cartouche 8 en dévissant la culasse 34 du canon 2. Grâce à la configuration du générateur de choc, la cartouche 8 peut être remplacée facilement sans procéder à un démontage complet du générateur de choc.

Le remplacement de la cartouche pyrotechnique peut être précédé d'une étape de purge du générateur de choc. Les gaz accumulés dans la chambre d'expansion pressurisée peuvent en effet entraîner une projection de la cartouche vers l'utilisateur lors du retrait de la culasse du canon. Le dispositif de purge permet d'évacuer les gaz en dehors du générateur pour éviter en outre une projection de la cartouche vers l'utilisateur.

L'étape de purge peut consister en un dévissage de la vis-pointeau 241 en dehors du conduit 240 formé dans le générateur de choc.

L'étape de purge peut également consister en un dévissage partiel de la culasse 36 du canon, comme l'illustre la figure 5. Lors du dévissage, les joints 22 disposés entre le canon 32 et la culasse 34 permettant d'assurer l'étanchéité du générateur de choc ne sont plus comprimés. Les extrémités des canaux de purge 24 ne sont plus obturées par la culasse et permettent de libérer une partie des gaz de combustion au fur et à mesure de la séparation de la culasse 34 et du canon 32. La pression à l'intérieur du générateur est ainsi équilibrée et permet d'éviter une projection de la cartouche. La culasse 36 est ensuite retirée du canon une fois la purge terminée pour pouvoir remplacer la cartouche.

Le déclenchement du générateur de choc peut être réitéré.

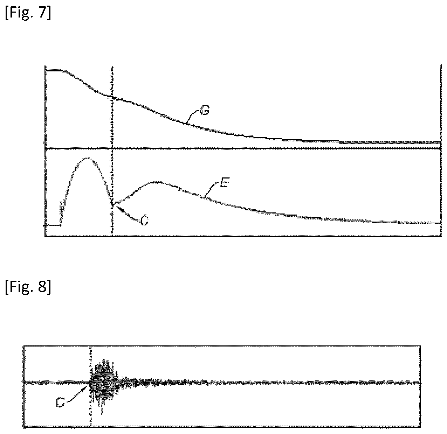

La figure 7 est une représentation schématique d'une décharge d'un boitier de puissance et commande, indépendant et multivoie dans un actionneur électromagnétique d'un générateur de choc 1.

Dans le cas où plusieurs générateurs de choc sont utilisés, pour chaque voie commandant un générateur de choc, le boitier de commande et de puissance peut être relié à un système d'acquisition et de contrôle comprenant un dispositif de mesure, un dispositif de traitement de signal et une interface (non représenté).

Dans un mode de réalisation, le système d'acquisition et de contrôle peut être intégré dans le boitier de puissance et de commande.

Le boitier de puissance et de commande est un générateur de courant programmable en amplitude et en durée. Il permet d'une part de contrôler l'impédance des lignes de commande raccordées aux générateurs de chocs et ensuite d'activer les générateurs de chocs. Deux types de déclenchements peuvent être sélectionnés.

Le déclenchement synchrone, dans lequel le déclenchement est commun pour toutes les voies du boitier de commande et de puissance de sorte que les générateurs de choc sont mis en fonctionnement au même instant.

Le déclenchement successif, avec lequel il est possible de décaler les voies les unes par rapport aux autres. Dans ce mode de fonctionnement, le déclenchement des générateurs de choc peut être déphasé.

La courbe de tension G illustre la variation du courant de décharge (axe des ordonnées) du boitier de puissance et de commande lors de sa décharge dans l'actionneur électromagnétique en fonction du temps (axe des abscisses).

La courbe d'intensité E illustre la variation de l'intensité du courant électrique (axe des ordonnées) dans l'actionneur électromagnétique 54 dans lequel se décharge le boitier de puissance et de commande en fonction du temps.

Le boitier de puissance et de commande se décharge dans l'actionneur électromagnétique. L'intensité du courant électrique augmente dans l'actionneur électromagnétique (courbe E) alors que le courant de décharge du boitier de puissance et de commande diminue (courbe G).

Le percuteur 40 de l'actionneur électromagnétique est mis en mouvement et se translate jusqu'à percuter la cartouche logée dans le logement de réception.

La percussion de la cartouche par le percuteur 40 est matérialisée par une cassure C de la courbe d'intensité E qui définit un instant de percussion de la cartouche. Cet instant de percussion est alors utilisé pour la synchronisation ou le déphasage des générateurs de choc.

En préliminaire aux essais de chocs, au moins deux générateurs de choc sont chargés avec des cartouches inertes c'est-à-dire des cartouches dépourvues de poudre.

Chaque générateur de choc est mis en fonctionnement.

L'instant de percussion de la cartouche de chaque générateur de choc est détecté. Les instants de percussion de chaque générateur de choc sont comparés de sorte à détecter un écart des instants de percussion de chaque générateur de choc.

Les commandes des systèmes de percussion des générateurs de choc sont ensuite synchronisés ou déphasées de sorte que la percussion des cartouches soit réalisée de façon synchrone ou avec un délai. La synchronisation ou le déphasage consiste en un décalage par paramétrage de retards électroniques intégrés sur la commande de chaque voie du boitier de puissance et de commande.

Dans un mode de réalisation illustré à la figure 8 la détection de l'instant de percussion peut comprendre une étape de mesure au moyen d'une courbe de mesure (chaîne accélérométrique) d'un choc émis par l'actionneur électromagnétique et le percuteur lors de la percussion des cartouches. La mesure du choc peut être réalisée au moyen d'un accéléromètre.

Bien évidemment, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé de synchronisation ou de déphasage d'au moins deux générateurs de choc (1) à cartouche, lesdits au moins deux générateurs de choc (1) étant actionnés au moyen d'un actionneur électromagnétique alimenté par un boitier de puissance et de commande (50), dans lequel le procédé comprend des étapes de :
- Mise en fonctionnement d'au moins deux générateurs de choc (1) comportant chacun une cartouche inerte,
- Détection d'un instant de percussion des cartouches de chaque générateur de choc (1),
- Synchronisation ou déphasage desdits au moins deux générateurs de choc (1).

2. Procédé de synchronisation ou de déphasage selon la revendication précédente dans lequel la détection de l'instant de percussion comprend une étape de mesure, au moyen d'une courbe d'intensité, d'un courant reçu par l'actionneur électromagnétique depuis le boitier de commande et puissance de chaque générateur de choc, l'instant de percussion étant matérialisé par une cassure de ladite courbe d'intensité.

3. Procédé de synchronisation ou de déphasage selon l'une des revendications 1 ou 2 dans lequel le procédé comprend une étape de mesure d'un choc émis par l'actionneur électromagnétique lors de la percussion des cartouches inertes.

4. Procédé de synchronisation ou de déphasage selon la revendication précédente, dans lequel la mesure du choc émis est réalisée au moyen d'un accéléromètre.

5. Procédé de synchronisation ou de déphasage selon l'une quelconque des revendications précédentes dans lequel la synchronisation ou le déphasage desdits au moins deux générateurs de choc consiste en un décalage dans le temps d'une mise en fonctionnement de chaque générateur de choc en fonction de leur instant de percussion.

6. Procédé de synchronisation ou de déphasage selon la revendication précédente dans lequel le décalage de la mise en fonctionnement est réalisé par paramétrage de retards électroniques intégrés sur une commande de chaque voie du boitier de puissance et de commande.

## Patentansprüche

1. Verfahren der Synchronisierung oder Phasenverschiebung von mindestens zwei Patronen-Stoßgeneratoren (1), wobei die mindestens zwei Stoßgeneratoren (1) mittels eines elektromagnetischen Aktuators, der von einem Leistungs- und Steuerkasten (50) gespeist wird, betätigt werden, wobei das Verfahren die Schritte umfasst, der:
- Inbetriebnahme von mindestens zwei Stoßgeneratoren (1), wobei jeder eine inerte Patrone beinhaltet,
- Erkennung eines Auslösungsmoments der Patronen jedes Stoßgenerators (1),
- Synchronisierung oder Phasenverschiebung der mindestens zwei Stoßgeneratoren (1).

2. Verfahren der Synchronisierung oder Phasenverschiebung nach dem vorhergehenden Anspruch, wobei die Erkennung des Auslösungsmoments einen Schritt des Messens eines Stroms umfasst, mittels einer Intensitätskurve, der vom elektromagnetischen Aktuator aus dem Leistungs- und Steuerkasten jedes Stoßgenerators empfangen wird, wobei der Auslösungsmoment durch einen Bruch der Intensitätskurve verwirklicht wird.

3. Verfahren der Synchronisierung oder Phasenverschiebung nach einem der Ansprüche 1 oder 2, wobei das Verfahren einen Schritt des Messens eines Stoßes umfasst, der vom elektromagnetischen Aktuator während der Auslösung der inerten Patronen abgegeben wird.

4. Verfahren der Synchronisierung oder Phasenverschiebung nach dem vorhergehenden Anspruch, wobei die Messung des abgegebenen Stoßes mittels eines Beschleunigungsmessers durchgeführt wird.

5. Verfahren der Synchronisierung oder Phasenverschiebung nach einem der vorhergehenden Ansprüche, wobei die Synchronisierung oder Phasenverschiebung der mindestens zwei Stoßgeneratoren aus einer Zeitverschiebung einer Inbetriebnahme jedes Stoßgenerators in Abhängigkeit von ihrem Auslösungsmoment besteht.

6. Verfahren der Synchronisierung oder Phasenverschiebung nach dem vorhergehenden Anspruch, wobei die Verschiebung der Inbetriebnahme durch Parametrierung integrierter elektronischer Verzögerungen an einer Steuerung jedes Kanals des Leistungs- und Steuerkastens durchgeführt wird.

## Claims

1. A method for synchronizing or phase shifting at least two cartridge shock generators (1), said at least two shock generators (1) being actuated by means of an electromagnetic actuator powered by a power and control case (50), wherein the method comprises steps of:
- operating at least two shock generators (1) each including an inert cartridge,
- detecting a time of percussion of the cartridges of each shock generator (1),
- synchronizing or phase shifting said at least two shock generators (1).

2. The synchronization or phase shift method according to the preceding claim, wherein the detection of the time of percussion comprises a step of measuring, by means of an intensity curve, a current received by the electromagnetic actuator from the power and control case of each shock generator, the time of percussion being indicated by a break in said intensity curve.

3. The synchronization or phase shift method according to any of claims 1 or 2, wherein the method comprises a step of measuring a shock emitted by the electromagnetic actuator during the percussion of the inert cartridges.

4. The synchronization or phase shift method according to the preceding claim, wherein the measurement of the emitted shock is carried out by means of an accelerometer.

5. The synchronization or phase shift method according to any one of the preceding claims, wherein the synchronization or the phase shift of said at least two shock generators consists of a time offset of an operation of each shock generator as a function of its time of percussion.

6. The synchronization or phase shift method according to the preceding claim, wherein the offset of the operation is carried out by setting electronic delays integrated on a command of each channel of the power and control case.
